# FASCICULE DE BREVET EUROPEEN

(11) **EP 2 547 727 B1**
(45) Date de publication et mention de la délivrance du brevet: **26.10.2016**
(21) Numéro de dépôt: 11708496.2
(22) Date de dépôt: 17.03.2011
(51) Int. Cl.: C08L 7/00, C08L 21/00, C08L 9/00, C08K 3/04

(54) **FLANC POUR PNEUMATIQUE**
SEITENWAND FÜR EINEN BEHÄLTER
SIDEWALL FOR TIRE

(30) Priorité: 18.03.2010 FR 1051948
(43) Date de publication de la demande: 23.01.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HENNEBERT, Guillaume, F-63040 Clermont-Ferrand Cedex 9 (FR); LAPRA, Arnaud, F-63040 Clermont-Ferrand Cedex 9 (FR)
(74) Mandataire: Cohen, Sylvia
(86) Numéro de dépôt international: PCT/EP2011/054061
(87) Numéro de publication internationale: WO 2011/113899

(56) Documents cités:
- WO-A2-02/092680
- US-A1- 2004 198 890
- US-A1- 2008 110 552

## Description

L'invention concerne un pneumatique comportant des flancs à base d'une composition de caoutchouc, et plus particulièrement un pneumatique destiné à équiper des véhicules à moteur de tourisme.

Un pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets.

Un flanc est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.

Les flancs de pneumatique, tout particulièrement les flancs de pneumatique de véhicule circulant en milieu urbain, sont soumis à une usure qui résulte de frottement contre les trottoirs. Ce phénomène également appelé râpage, a pour effet d'user la surface extérieure des flancs. Cette usure peut entraîner une détérioration rendant le pneumatique inutilisable. En effet l'armature de carcasse ne doit pas être endommagée. C'est pourquoi pour protéger l'armature de carcasse des agressions physiques comme le râpage ou des agressions chimiques comme l'ozone, le flanc doit être suffisamment résistant à l'usure de râpage. Pour améliorer cette résistance à l'usure, l'homme du métier a généralement recours à l'utilisation de compositions de caoutchouc comportant des charges renforçantes à des taux relativement élevés.

Etant donné les cycles de déformation comme la flexion auxquels est soumis le flanc, une composition pour être utilisable en tant que flanc doit être la moins hystérétique possible et rendre le flanc suffisamment flexible. L'homme du métier se trouve confronté à la problématique de concilier faible résistance au roulement et flexibilité des flancs. Or l'introduction de taux élevés de charges renforçantes pourtant requise pour améliorer les propriétés de résistance au râpage, comme on l'a vu précédemment, a pour effet une augmentation de la résistance au roulement et une baisse de la flexibilité des compositions concernées.

Par ailleurs les cycles en flexion subis par le flanc au cours du roulage du pneumatique, en particulier si ces cycles sont conjugués à l'action de l'ozone, peuvent faire apparaître des craquelures ou fissures notamment dans le flanc, empêchant l'utilisation du pneumatique indépendamment de l'usure de la bande de roulement.

L'homme du métier doit donc trouver une solution pour améliorer la résistance au râpage du flanc sans pénaliser les performances de faible résistance au roulement et de bonne résistance à la fissuration.

Comme l'illustrent de nombreux documents parmi lesquels on peut citer les documents EP 1 462 479 B1, EP 1 975 200 A1, EP 1 033 265 B1, EP 1 357 149 A2, EP 1 231 080 A1 et US 4,824,900, les compositions traditionnellement utilisées pour des flancs sont à base de caoutchouc naturel et de caoutchouc synthétique comme le polybutadiène, et de noir de carbone.

Pour les véhicules de tourisme, il est connu pour l'homme du métier d'utiliser plus préférentiellement des noirs de carbone de surface spécifique BET strictement inférieure à 49 m²/g. Pour les véhicules du type poids lourds sont traditionnellement utilisés les noirs de carbone de surface spécifique BET comprise entre 70 et 99 m²/g. La proportion du noir de carbone introduit dans un flanc aussi bien pour les véhicules de tourisme que pour les véhicules poids lourds, se situe habituellement aux environ de 50 parties en poids pour cent parties d'élastomère (pce) avec une fraction volumique d'au moins 15%, la fraction volumique correspondant au volume de noir de carbone par rapport au volume de l'ensemble des constituants de la composition, telle que définie de façon plus détaillée dans le paragraphe I-1.

La demanderesse a découvert de façon surprenante que l'utilisation de noir de carbone ou de mélange de noirs de carbone de surface spécifique BET allant de 50 à 69 m²/g à titre de charge renforçante majoritaire dans les compositions de caoutchouc pour flanc, avec un taux de charge renforçante très inférieur à 50 pce et avec une fraction volumique de charge renforçante très inférieure à 15%, permettait d'améliorer la résistance au râpage du flanc sans pénaliser les performances de bonne résistance à la fissuration et de faible résistance au roulement, voire même d'améliorer l'une ou l'autre de ces deux propriétés.

L'invention concerne un flanc de pneumatique dont au moins une portion a une composition de caoutchouc à base d'au moins un élastomère diénique, un système de réticulation et une charge renforçante, caractérisé en ce que le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou un mélange de noirs de carbone de surface spécifique BET allant de 50 m²/g à 69 m²/g.

L'invention a encore pour objet un procédé de préparation d'une composition pour flanc de pneumatique à base d'au moins un élastomère diénique, un système de réticulation et une charge renforçante, caractérisé en ce que le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou un mélange de noirs de carbone de surface spécifique BET allant de 50 m²/g à 69 m²/g, et en ce que le procédé comprend les étapes suivantes :
- malaxer l'élastomère diénique et la charge renforçante thermomécaniquement jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc,
- calandrer ou extruder la composition de caoutchouc.

L'invention concerne également un pneumatique comportant un flanc dont au moins une portion a une composition de caoutchouc qui est à base d'au moins un élastomère diénique, un système de réticulation et une charge renforçante, caractérisé en ce que le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou un mélange de noirs de carbone de surface spécifique BET allant de 50 m²/g à 69 m²/g.

Avantageusement le pneumatique conforme à l'invention est destiné à équiper des véhicules poids lourds ou de tourisme, plus préférentiellement des véhicules de tourisme.

### I. MESURES ET TESTS UTILISES

Les compositions de caoutchouc ou les flancs les comportant sont caractérisés après cuisson comme indiqué ci-après.

### I-1 Fraction volumique de charge renforçante

La fraction volumique de charge renforçante dans une composition de caoutchouc est définie comme étant le rapport du volume de la charge renforçante sur le volume de l'ensemble des constituants de la composition, étant entendu que le volume de l'ensemble des constituants est calculé par en additionnant le volume de chacun des constituants de la composition. La fraction volumique de charge renforçante dans une composition est donc définie comme le rapport du volume de la charge renforçante sur la somme des volumes de chacun des constituants de la composition.

### I-2 Performance résistance au roulement

Les propriétés dynamiques tanδₘₐₓ sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (23°C) selon la norme ASTM D 1349-09. On effectue un balayage en amplitude de déformation crête-crête de 0,1 à 50% (cycle aller), puis de 50% à 0,1% (cycle retour). Le résultat exploité est le facteur de perte tanδ. Pour le cycle retour, on indique la valeur maximale de tanδ observée (tanδₘₐₓ).
L'indice de performance est le rapport de la valeur de tanδₘₐₓ de la composition témoin sur la valeur de tanδₘₐₓ de l'exemple considéré. Le témoin ayant un indice 100, une valeur supérieure à 100 indique une meilleure performance de résistance au roulement.

### I-3 Performance fissuration

On réalise un roulage à 70km/h sur volant d'un pneumatique de dimension 205/55R16 dont les flancs sont au préalable entaillés par des fissures de 20 mm de long et de 1.7 mm de profondeur. Le test est arrêté à 25000 km ou à la constatation d'une perte de pression. L'indice de performance est le rapport de la longueur propagée en surface du pneumatique témoin sur la longueur propagée en surface du pneumatique à mesurer. Le témoin ayant un indice 100, une valeur supérieure à 100 indique une meilleure performance de résistance à la fissuration.

### I-4 Performance râpage flanc

Ce test est réalisé sur un véhicule dont le pneumatique avant gauche frotte contre le trottoir au ralenti. Le test est arrêté à l'apparition des câblés de la nappe carcasse ou à la constatation d'une perte de pression. Le résultat fourni est la perte de masse du pneumatique par distance parcourue. L'indice de performance est le rapport de la perte de masse par distance parcourue du témoin sur celle de l'exemple considéré. Le témoin ayant un indice 100, une valeur supérieure à 100 indique une meilleure performance de résistance au râpage.

### II- DESCRIPTION DETAILLEE DE L'INVENTION

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le flanc conforme à l'invention a pour caractéristique essentielle d'être constitué d'au moins une portion ayant une composition de caoutchouc à base d'au moins un élastomère diénique, un système de réticulation et une charge renforçante, caractérisé en ce que le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou un mélange de noirs de carbone de surface spécifique BET allant de 50 m²/g à 69 m²/g.

Selon un mode de réalisation préférentiel, cette portion de flanc est située sur la face extérieure du flanc.

Selon un autre mode de réalisation préférentiel, cette portion de flanc s'étend depuis le sommet jusqu'au bourrelet.

Selon un autre mode de réalisation préférentiel, cette portion de flanc comprenant la composition selon l'invention peut être sous la forme d'un profilé appliqué sur la zone du flanc qui est susceptible de frotter contre les trottoirs.

Le cas échéant, les autres portions éventuelles constitutives du flanc peuvent être à base de compositions de caoutchouc différentes et connues de l'homme du métier, par exemple à base de noir de carbone N550 ou N660 (définis selon la norme ASTM D1765-06) pour des fractions volumiques de charge d'au moins 15.0%.

### II-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans l'invention :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que l'invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Préférentiellement, l'élastomère diénique utilisé dans l'invention est choisi dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc selon l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Selon un mode de réalisation particulier, la composition de caoutchouc peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un mode de réalisation préférentiel, on utilise, à titre d'élastomère diénique dans la composition, un mélange d'élastomères composé de 30 à 55% de caoutchouc naturel, d'un polyisoprène de synthèse ou d'un mélange de caoutchouc naturel et d'un polyisoprène de synthèse, et de 45 à 70% d'un élastomère diénique choisi parmi les polybutadiènes, les copolymères styrène-butadiène, les copolymères d'isoprène-butadiène, les copolymères d'isoprène-styrène et les terpolymères isoprène-butadiène-styrène et les mélanges de ces derniers.

Le polyisoprène de synthèse est préférentiellement un polyisoprène cis-1,4 de synthèse; de préférence un polyisoprène ayant un taux (% molaire) de liaisons cis-1,4 supérieur à 90%, préférentiellement supérieur ou égal à 98%.

Selon un mode de réalisation plus préférentiel, on utilise un mélange composé de 30 à 55% de caoutchouc naturel, d'un polyisoprène de synthèse ou d'un mélange de caoutchouc naturel et d'un polyisoprène de synthèse, et de 45 à 70% d'un polybutadiène, préférentiellement un polybutadiène cis-1,4, c'est-à-dire un polybutadiène ayant un taux de liaisons cis-1,4 supérieur à 90% (% molaire), préférentiellement supérieur ou égal à 96% (% molaire).

Avantageusement le polybutadiène peut être couplé et/ou étoilé ou encore fonctionnalisé avec un agent de couplage et/ou d'étoilage ou de fonctionnalisation pour un couplage à du noir de carbone ou à de la silice, comme précédemment décrit. La fonctionnalisation du polybutadiène peut être également réalisée au cours de l'étape d'amorçage de la réaction de polymérisation du butadiène en utilisant un amorceur fonctionnel comme par exemple un organolithium portant une fonction amine, un amidure de lithium ou un organostannyllithium.

### II-2. Charge renforçante

La charge renforçante comporte, à titre de charge organique, au moins un (c'est-à-dire un ou plusieurs) noir de carbone ayant une surface spécifique BET allant de 50 m²/g à 69 m²/g. Ces noirs de carbone sont par exemple les noirs SR401 de Sid Richardson et Spheron 1416 de Cabot. Les noirs de carbone pourraient être par exemple déjà incorporés à l'élastomère isoprénique sous la forme d'un masterbatch (voir par exemple demandes WO 97/36724 ou WO 99/16600).

Précisons que la surface spécifique BET a été mesurée selon la norme ASTM D6556-09 [méthode multipoints (5 points) - gaz : azote - domaine de pression relative P/P0 : 0.05 à 0.30]

Convient également comme noir de carbone un mélange de noirs de carbone caractérisé en ce que le mélange de noirs de carbone a une surface spécifique BET allant de 50 m²/g à 69 m²/g. En particulier les noirs de carbone constituant un tel mélange sont des noirs de carbone de grades ASTM différents.

Comme caractéristique essentielle de l'invention, on utilise dans la composition de caoutchouc 20 à 40 pce d'une charge renforçante comprenant majoritairement un noir de carbone ou un mélange de noirs de carbone ayant une surface spécifique BET allant de 50 m²/g à 69 m²/g avec une fraction volumique de la charge renforçante dans la composition allant de 8.0% à 13.0%. Le terme « majoritairement » signifie que le noir de carbone ou le mélange de noirs de carbone de surface spécifique BET allant de 50 m²/g à 69 m²/g représente plus de 50% en poids de la charge renforçante.

Cette double condition portant sur la plage de 20 à 40 pce de charge renforçante (qui comprend comme on l'a déjà dit majoritairement un noir de carbone ou un mélange de noirs de carbone de surface spécifique BET allant de 50 m²/g à 69 m²/g) et de 8.0 à 13.0% de fraction volumique est nécessaire pour répondre au problème posé. En effet :
- Au-delà de 40 pce de charge renforçante avec une fraction volumique de cette charge renforçante supérieure à 13.0%, la composition devient trop hystérétique et trop rigide pour une application en tant que flanc de pneumatique ;
- Au-delà de 40 pce de charge renforçante avec une fraction volumique de cette charge renforçante comprise entre 8.0% et 13.0%, le taux d'élastomère diénique dans la composition est trop faible pour assurer une cohésion suffisante de la composition ;
- En deça de 20 pce de charge renforçante, indépendamment de la fraction volumique de cette charge renforçante, la quantité de charge renforçante est trop faible pour permettre un renforcement suffisant de la composition pour flanc ;
- Une fraction volumique de charge renforçante inférieure à 8.0%, indépendamment du taux de charge renforçante, correspond à une dilution de la charge trop importante qui entraîne une déchéance en usure de râpage ;
- Le domaine qui correspond à des taux de charge renforçante compris entre 20 et 40 pce avec une fraction volumique de cette charge renforçante supérieure à 13.0%, ne permet pas d'obtenir une composition ayant le compromis de propriétés recherché. En effet pour les taux les plus faibles de charge renforçante dans cette plage (c'est-à-dire proches de la borne inférieure) on ne peut jamais atteindre une fraction volumique de charge renforçante supérieure à 13.0%, et pour les taux plus élevés de cette plage la composition est trop rigide et/ou trop hystérétique pour une application en tant que flanc de pneumatique.

La charge renforçante étant constituée majoritairement de noir de carbone ou d'un mélange de noirs de carbone ayant une surface spécifique BET allant de 50 m²/g à 69 m²/g, cette charge renforçante peut comprendre en quantité minoritaire une ou plusieurs autres charges renforçantes. Comme autre charge renforçante conviennent les charges organiques renforçantes et les charges inorganiques renforçantes.

Comme charge organique renforçante autre qu'un noir de carbone ou qu'un mélange de noirs de carbone ayant une surface spécifique BET allant de 50 m²/g à 69 m²/g, on peut citer les noirs de carbone de surface spécifique BET strictement inférieure à 50 m²/g tels que, à titre d'exemple, le noir de carbone N683 ou le noir de carbone N550, ou les noirs de carbone de surface spécifique BET strictement supérieure à 69 m²/g, tels que le noir de carbone N110 ou le noir de carbone N299.

Conviennent également comme charge organique renforçante des charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatique, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

La proportion de charge renforçante autre que le noir de carbone ou le mélange de noirs de carbone ayant une surface spécifique BET allant de 50 m²/g à 69 m²/g est ajustée selon sa surface spécifique BET et selon le compromis de performance recherché. Ainsi, par exemple on peut utiliser un noir de carbone de surface spécifique BET strictement supérieur à 69 m²/g pour optimiser la résistance à l'usure tout en prenant garde de ne pas pénaliser la résistance au roulement en minimisant sa quantité. On peut également utiliser, par exemple, à titre de charge renforçante minoritaire dans la composition conforme à l'invention, un noir de carbone ayant une surface spécifique BET strictement inférieure à 50 m²/g, ce qui est favorable pour optimiser la performance de faible résistance au roulement.

Selon un mode de réalisation préférentiel, le noir de carbone ou le mélange de noirs de carbone ayant une surface spécifique BET allant de 50 m²/g à 69 m²/g constitue au moins 85% en poids de la charge renforçante. Encore plus préférentiellement il constitue au moins 95% de la charge renforçante. Avantageusement le noir de carbone ou le mélange de noirs de carbone de surface spécifique BET allant de 50 m²/g à 69 m²/g est utilisé à titre exclusif comme charge renforçante, c'est-à-dire il constitue 100% de la charge renforçante.

Selon un autre mode de réalisation préférentiel, la proportion de charge renforçante dans la composition de caoutchouc varie de 20 pce à 35 pce, et plus avantageusement de 25 pce à 30 pce. Lorsque la charge renforçante est utilisée préférentiellement dans une proportion allant de 20 pce à 35 pce, et encore plus préférentiellement de 25 pce à 30 pce, la fraction volumique de charge renforçante varie préférentiellement de 8.0% à 10.0%, plus préférentiellement de 8.7% à 9.4% et encore plus préférentiellement de 8.9% à 9.2%. Ces plages préférentielles en terme de taux et de fraction volumique de charge renforçante sont des modes de réalisation préférentiels qui permettent d'optimiser le compromis entre les performances de résistance au roulement, de résistance à la fissuration et de résistance au râpage, dans la mesure où les compositions dont le taux et la fraction volumique de charge renforçante respectent ces plages préférentielles, présentent un gain en résistance au râpage tout en améliorant la performance de faible résistance au roulement ou la performance de bonne résistance à la fissuration.

Selon un autre mode de réalisation, le noir de carbone ou le mélange de noirs de carbone ayant une surface spécifique BET allant de 50 m²/g à 69 m²/g a un nombre d'absorption COAN allant de 80 ml/100 g à 120 ml/100 g. Cette plage de valeurs du nombre de COAN est favorable pour conférer des propriétés encore meilleures à la composition de caoutchouc pour flanc. Effectivement un noir de carbone ou un mélange de noirs de carbone avec un nombre COAN inférieur à 120 ml/100 g rigidifie moins la composition de caoutchouc pour flanc qu'un noir de carbone de nombre COAN supérieur à 120 ml/100 g, tandis que l'utilisation d'un noir de carbone ou d'un mélange de noirs de carbone avec un nombre COAN supérieur à 80 ml/100 g permet d'atteindre une meilleure dispersion dudit noir de carbone ou dudit mélange de noirs de carbone dans la composition de caoutchouc pour flanc. Précisons que le nombre COAN est déterminé selon la norme ASTM D3493-09.

### II.3- Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce, préférentiellement entre 1 et 3 pce. L'accélérateur primaire de vulcanisation est utilisé à un taux compris entre 0,5 et 10 pce, préférentiellement compris entre 0,5 et 5,0 pce, plus préférentiellement compris entre 0.5 et 3 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de 20 tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### II-4. Additifs divers

Selon l'invention, la composition de caoutchouc peut comporter également tout ou partie des additifs usuels habituellement utilisés dans les compositions d'élastomères destinées à la fabrication de pneumatiques ou produits semi-finis pour pneumatiques, comme par exemple des plastifiants, de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que agents anti-ozonants, anti-oxydants, des agents anti-fatigue, des agents anti-réversion.

Parmi les antioxydants, on peut citer notamment les dérivés de la para-phénylène diamine (en abrégé "PPD" ou "PPDA"), encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1,4-diméthyl-pentyl)-p-phénylène-diamine, la N,N'-diaryl-p-phénylène diamine ("DTPD"), la diaryl-p-phénylène-diamine ("DAPD"), la 2,4,6-tris-(N-1,4-diméthylpentyl-p-phénylènediamino)-1,3,5-triazine, et les mélanges de telles diamines On peut également citer des dérivés de la quinoléine ("TMQ") tels que par exemple la 1,2-dihydro-2,2,4-triméthylquinoléine 5 et la 6-éthoxy-1,2-dihydro-2,2,4-triméthyl-quinoléine. On peut également citer des diphénylamines ou triphénylamines substituées, telles que décrites par exemple dans les demandes WO 2007/121936 et WO 2008/055683, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine. De préférence, l'antioxydant est choisi dans le groupe constitué par les p-phenylène diamines substituées, les diphénylamines substituées, les triphénylamines substituées, les dérives de la quinoléine, et les mélanges de tels composés.

Selon un mode de réalisation préférentiel, la composition de caoutchouc selon l'invention comprend un plastifiant choisi parmi les huiles naphténiques, paraffiniques, les huiles MES ou TDAE ou leurs mélanges.

La composition peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II- 5. Fabrication de la composition de caoutchouc

La composition de caoutchouc est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition pour flanc de pneumatique à base d'au moins un élastomère diénique, un système de réticulation et une charge renforçante, caractérisé en ce que le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou un mélange de noirs de carbone de surface spécifique BET allant de 50 m²/g à 69 m²/g, et en ce que le procédé comprend les étapes suivantes :
- malaxer l'élastomère diénique et la charge renforçante thermomécaniquement jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc,
- calandrer ou extruder la composition de caoutchouc.

La première étape de malaxage est généralement réalisée en incorporant la charge renforçante à l'élastomère en une ou plusieurs fois en malaxant thermomécaniquement. Dans le cas où la charge renforçante, en particulier le noir de carbone ou le mélange de noirs de carbone ayant une surface spécifique BET allant de 50 m²/g à 69 m²/g, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch.

Selon un mode de réalisation préférentiel du procédé, le noir de carbone ou le mélange de noirs de carbone ayant une surface spécifique BET allant de 50 m²/g à 69 m²/g constitue au moins 85% en poids de la charge renforçante, préférentiellement au moins 95%, encore plus préférentiellement 100%.

Selon un autre mode de réalisation préférentiel du procédé, la proportion de charge renforçante varie de 20 pce à 35 pce, préférentiellement de 25 pce à 30 pce.

Selon un autre mode de réalisation préférentiel du procédé, la fraction volumique de charge renforçante varie de 8.0% à 10.0%, préférentiellement de 8.7% à 9.4%.

Les deux premières étapes peuvent être réalisées de manière consécutive sur un même mélangeur ou être séparée par une étape de refroidissement à une température inférieure à 100°C, la dernière étape étant alors réalisée sur un deuxième mélangeur.

A titre d'exemple, la première phase est conduite en une seule étape thermomécanique au cours de laquelle on introduit, dans un mélangeur approprié tel qu'un mélangeur interne usuel, dans un premier temps tous les constituants de base nécessaires (l'élastomère en totalité ou en partie, la charge renforçante en totalité ou en partie et l'agent de couplage si nécessaire), puis dans un deuxième temps, par exemple après une à deux minutes de malaxage, le résiduel d'élastomère et de charge renforçante le cas échéant, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé pendant quelques minutes, par exemple entre 2 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels qu'une couche de flanc.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

Les exemples qui suivent illustrent l'invention, sans toutefois la limiter.

### III. EXEMPLES DE REALISATION DE L'INVENTION

### III-1 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (mélange NR et BR), le noir de carbone, puis, après une à deux minutes de malaxage, les divers autres ingrédients comme l'antioxydant, l'anti-ozonant, les activateurs de vulcanisation à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide sur un mélangeur externe (homo-finisseur) à 70°C, en mélangeant le tout (phase productive) pendant environ 5 à 6 min.

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées sous la forme de profilés utilisables directement, après découpage et/ou assemblage aux dimensions souhaitées, pour obtenir un flanc.

### III-2. Essais

Les essais ont pour but de montrer l'amélioration des propriétés des flancs de pneumatique conformes à l'invention par rapport à un flanc de pneumatique témoin pour véhicule de tourisme. Ils démontrent aussi que des compositions, bien qu'elles comprennent un noir de carbone de surface spécifique allant de 50 m²/g à 69 m²/g, ne permettent pas de résoudre le problème technique de l'invention en raison soit d'un taux de charge renforçante qui n'est pas conforme à l'invention, soit d'une fraction volumique de charge renforçante qui n'est pas conforme à l'invention, ou encore en raison d'un taux et d'une fraction volumique de charge renforçante qui sont tous les deux non conformes à l'invention.

Les six compositions A, B, C, D, E et F pour flanc ont été fabriquées conformément au procédé détaillé dans le paragraphe précédent. Ces compositions détaillées dans le tableau 1 (où les quantités sont exprimées en pce), diffèrent par la nature et le taux de charge renforçante ainsi que par la fraction volumique de charge renforçante.

Ainsi les compositions A, B, C, D, E et F sont définies comme suit :
- la composition témoin A traditionnellement utilisée en tant que flanc pour un véhicule de tourisme, comprend 50 pce d'un noir de carbone de surface spécifique BET égale à 39 m²/g avec une fraction volumique de charge renforçante égale à 15.5%,
- la composition B conforme à l'invention comprend 28 pce d'un noir de carbone de surface spécifique BET égale à 62 m²/g avec une fraction volumique de charge renforçante égale à 9.2%,
- la composition C conforme à l'invention comprend 25 pce d'un noir de carbone de surface spécifique BET égale à 62 m²/g avec une fraction volumique de charge renforçante égale à 9.1 %,
- la composition D conforme à l'invention comprend 25 pce d'un mélange de noirs de carbone de surface spécifique BET égale à 64 m²/g, composé à 60% de N347 et 40% de N683 avec une fraction volumique de charge renforçante égale à 9.1%,
- la composition E qui n'est pas conforme à l'invention à cause du taux et de la fraction volumique de charge renforçante, comprend 43 pce d'un noir de carbone de surface spécifique BET égale à 62 m²/g avec une fraction volumique de charge renforçante égale à 15.2%,
- la composition F qui n'est pas non plus conforme à l'invention à cause du taux de charge renforçante, comprend 43 pce d'un noir de carbone de surface spécifique BET égale à 62 m²/g avec une fraction volumique de charge renforçante égale à 12.4%.

On note que la composition D conforme à l'invention se différencie de la composition C en ce que la charge renforçante de la composition D est un mélange de noirs de carbone qui est composé de 60% de N347 et 40% de N683 et qui est caractérisé par une surface spécifique BET de 64 m²/g et un nombre d'absorption d'huile COAN de 93 ml/100 g. Ces valeurs de BET et de COAN ont été mesurées dans les mêmes conditions de mesure que pour le noir de carbone utilisé dans la composition C.

**Tableau 1**

| **Composition :** | **A témoin** | **B** | **C** | **D** | **E** | **F** |
|---|---|---|---|---|---|---|
| NR (1) | 50 | 50 | 50 | 50 | 50 | 50 |
| BR (2) | 50 | 50 | 50 | 50 | 50 | 50 |
| Noir de carbone (3) | 50 | - | - | - | - | - |
| Noir de carbone (4) | - | 28 | 25 | - | 43 | 43 |
| Noir de carbone (5) | - | - | - | 25 | - | - |
| Plastifiant (6) | 20 | 22 | 10 | 10 | 5 | 13 |
| Cire anti-ozone | 1 | 1 | 1 | 1 | 1 | 1 |
| Antioxydant (7) | 4 | 4 | 4 | 4 | 4 | 4 |
| ZnO | 2.5 | 2.5 | 2.5 | 2.5 | 2.5 | 2.5 |
| Acide stéarique | 1.1 | 1.1 | 1.1 | 1.1 | 1.1 | 1.1 |
| Soufre | 1.4 | 1.4 | 1.4 | 1.4 | 1.4 | 1.4 |
| Accélérateur (8) | 1.4 | 1.4 | 1.4 | 1.4 | 1.4 | 1.4 |
| Fraction volumique de la charge renforçante | 15.5% | 9.2% | 9.1% | 9.1% | 15.2% | 12.4% |

| | | | | | | |
|---|---|---|---|---|---|---|
| (1) caoutchouc naturel ; (2) polybutadiène CB 24 de Lanxess avec 96% (% molaire) de cis (3) noir de carbone N683 (BET égale à 39 m²/g; COAN 89 ml/100 g) (4) noir de carbone SR401 de Sid Richardson (BET 62 m²/g ; COAN 107 ml/100 g) (5) mélange à 60% de N347 (BET 88 m²/g; COAN 98 ml/100 g) et 40% de N683 (6) huile MES (Flexon 683, société Exxon Mobil) ; (7) N-1,3-diméthylbutyl-N'-phényl-paraphénylènediamine (6-PPD) (8) N-cyclohexyl-2-benzothiazyl-sulfénamide (Santocure CBS de la société Flexsys) | | | | | | |

On mesure les propriétés dynamiques de ces compositions A, B, C, D, E et F pour déterminer la performance de résistance au roulement. Les résultats de performance de résistance au roulement figurent dans le tableau 2.

**Tableau 2**

| | **A (témoin)** | **B** | **C** | **D** | **E** | **F** |
|---|---|---|---|---|---|---|
| **Résistance au roulement** | 100 | 143 | 143 | 137 | 95 | 91 |

Seules les compositions B, C et D conformes à l'invention présentent un indice de résistance au roulement amélioré par rapport à la composition A témoin. Les compositions E et F qui se différencient de B et C par la fraction volumique et le taux de charge renforçante qui ne sont pas conformes à l'invention, présentent une hystérèse dégradée par rapport au témoin, ce qui implique une résistance au roulement plus élevée des flancs contenant les compositions E et F par rapport au témoin. Ces compositions E et F pénalisant la résistance au roulement, ne peuvent donc pas répondre au problème technique de l'invention visant à améliorer la résistance au râpage du flanc sans pénaliser les performances de bonne résistance à la fissuration et de faible résistance au roulement, et n'ont donc pas été évaluées vis-à-vis de la résistance au râpage et à la fissuration des flancs.

Les compositions A, B, C et D ont donc été utilisées pour constituer des flancs de pneumatique de dimension 205/55R16, chaque flanc étant constitué d'une seule portion allant depuis le bourrelet jusqu'au point de jonction avec la bande de roulement. Ces pneumatiques sont identiques à l'exception de la composition constituant leurs flancs respectifs. Les pneumatiques de dimension 205/55R16 sont testés aux conditions nominales (pression, charge, jante) telles que définies par la norme ETRTO.

Les performances de résistance au râpage et à la fissuration des flancs FA, FB, FC et FD ayant les compositions respectives A, B, C et D, sont présentées dans le tableau 3.

**Tableau 3**

| | **Résistance au râpage** | **Résistance à la fissuration** |
|---|---|---|
| **FA (témoin)** | 100 | 100 |
| **B** | 116 | Pas de propagation des entailles |
| **C** | 123 | 125 |
| **D** | 118 | 100 |

On constate de façon surprenante que les flancs FB et FC conformes à l'invention, c'est-à-dire comprenant un noir de carbone de surface spécifique BET égale à 62 m²/g (à 28 pce et 25 pce respectivement pour une fraction volumique respective de la charge renforçante de 9.2% et 9.1%) présentent les indices de résistance au râpage plus élevés que le flanc FA témoin. Ces résultats sont particulièrement étonnants, car au regard de l'état de la technique il est connu pour l'homme du métier qu'une baisse du taux et de la fraction volumique de charge renforçante a pour conséquence de dégrader la performance de résistance à l'usure, en particulier de râpage.

Par ailleurs, l'amélioration en terme de performance de fissuration est également très nette qu'il s'agisse des flancs FB ou FC conformes à l'invention, et plus particulièrement pour le flanc FB qui ne subit aucune propagation des entailles initiales dans les conditions du test.

On constate aussi que le flanc FD conforme à l'invention, comprenant un mélange de noirs de carbone de surface spécifique égale à 64 m²/g, présente aussi une résistance au râpage plus élevée que le flanc FA témoin, avec un niveau de résistance à la fissuration au moins du même ordre que le témoin FA.

Rappelons que la charge renforçante de la composition D est en fait un mélange de noirs de carbone constitué de 10 pce de N347 et 15 pce de N683. On note donc que ce compromis de performance est en particulier atteint avec un mélange de noirs de carbone dont la surface spécifique est comprise entre 50 m²/g et 69 m²/g (dans la mesure où les autres caractéristiques de la composition sont également respectées, notamment fraction volumique et le taux de charge renforçante), bien que la surface spécifique respective de chacun des noirs de carbone du mélange soit en dehors de la plage conforme à l'invention allant de 50 m²/g à 69 m²/g.

En résumé, la nette amélioration de la performance de râpage des pneumatiques selon l'invention ne se fait au détriment ni de la performance de résistance au roulement, ni de la performance de fissuration. Même, dans certaines conditions de taux et de fraction volumique de charge renforçante, elle s'accompagne à la fois d'une forte amélioration de la résistance au roulement et d'une forte amélioration de la résistance à la fissuration, et ceci de façon tout à fait inattendue.

## Revendications

1. Flanc de pneumatique dont au moins une portion a une composition de caoutchouc à base d'au moins un élastomère diénique, un système de réticulation et une charge renforçante, **caractérisé en ce que** le taux de charge renforçante dans la composition varie de 20 à 40 parties en poids pour cent parties d'élastomère, pce, avec une fraction volumique de charge renforçante dans la composition allant de 8.0% à 13.0%, et **en ce que** cette charge renforçante comprend majoritairement un noir de carbone ou un mélange de noirs de carbone dont la surface spécifique BET va de 50 m²/g à 69 m²/g.

2. Flanc de pneumatique selon la revendication 1, **caractérisé en ce que** le noir de carbone ou le mélange de noirs de carbone de surface spécifique BET allant de 50 m²/g à 69 m²/g constitue au moins 85% en poids de la charge renforçante, plus préférentiellement au moins 95% de la charge renforçante.

3. Flanc de pneumatique selon la revendication 1 ou 2, **caractérisé en ce que** le noir de carbone ou le mélange de noirs de carbone de surface spécifique BET allant de 50 m²/g à 69 m²/g est utilisé en mélange avec une ou plusieurs autres charges renforçantes organiques ou inorganiques.

4. Flanc de pneumatique selon la revendication 1 ou 2, **caractérisé en ce que** le noir de carbone ou le mélange de noirs de carbone de surface spécifique BET allant de 50 m²/g à 69 m²/g constitue 100% de la charge renforçante.

5. Flanc de pneumatique selon l'une quelconque des revendications 1 à 4, **caractérisé en ce que** le noir de carbone ou le mélange de noirs de carbone de surface spécifique BET allant de 50 m²/g à 69 m²/g a un nombre d'absorption d'huile COAN allant de 80 ml/100 g à 120 ml/100 g.

6. Flanc de pneumatique selon l'une quelconque des revendications 1 à 5, **caractérisé en ce que** la proportion de charge renforçante dans la composition varie de 20 pce à 35 pce.

7. Flanc de pneumatique selon la revendication 6, **caractérisé en ce que** la proportion de charge renforçante dans la composition varie de 25 pce à 30 pce.

8. Flanc de pneumatique selon l'une quelconque des revendications 6 ou 7, **caractérisé en ce que** la fraction volumique de la charge renforçante dans la composition varie de 8.0% à 10.0%.

9. Flanc de pneumatique selon la revendication 8, **caractérisé en ce que** la fraction volumique de la charge renforçante dans la composition varie de 8.7% à 9.4%.

10. Flanc de pneumatique selon l'une quelconque des revendications 1 à 9, **caractérisé en ce que** la composition de caoutchouc comprend un mélange d'élastomères composé de 30 à 55% de caoutchouc naturel, d'un polyisoprène de synthèse ou d'un mélange de caoutchouc naturel et d'un polyisoprène de synthèse, et de 45 à 70% d'un élastomère diénique choisi parmi les polybutadiènes, les copolymères styrène-butadiène, les copolymères d'isoprène-butadiène, les copolymères d'isoprène-styrène et les terpolymères isoprène-butadiène-styrène et les mélanges de ces derniers.

11. Flanc de pneumatique selon la revendication 10, **caractérisé en ce que** ledit élastomère diénique est un polybutadiène, préférentiellement un polybutadiène cis-1,4.

12. Flanc de pneumatique selon l'une quelconque des revendications 1 à 11, **caractérisé en ce que** la composition de caoutchouc comprend un plastifiant.

13. Flanc de pneumatique selon l'une quelconque des revendications 1 à 12, **caractérisé en ce que** la portion de flanc est située sur la face extérieure du flanc.

14. Flanc de pneumatique selon l'une quelconque des revendications 1 à 13, **caractérisé en ce que** la portion de flanc s'étend depuis le sommet jusqu'au bourrelet.

15. Pneumatique comportant un flanc selon l'une quelconque des revendications 1 à 14.

16. Procédé de préparation d'une composition pour flanc de pneumatique à base d'au moins un élastomère diénique, un système de réticulation et une charge renforçante, **caractérisé en ce que** le taux de charge renforçante dans la composition varie de 20 à 40 pce avec une fraction volumique de charge renforçante dans la composition allant de 8.0% à 13.0%, et que cette charge renforçante comprend majoritairement un noir de carbone ou le mélange de noirs de carbone de surface spécifique BET allant de 50 m²/g à 69 m²/g, et **en ce que** le procédé comprend les étapes suivantes :
• malaxer l'élastomère diénique et la charge renforçante thermomécaniquement jusqu'à atteindre une température maximale comprise entre 110°C et 190°C ;
• refroidir l'ensemble à une température inférieure à 100°C ;
• incorporer ensuite le système de réticulation ;
• malaxer le tout jusqu'à une température maximale inférieure à 110°C pour obtenir une composition de caoutchouc,
• calandrer ou extruder la composition de caoutchouc.

17. Procédé de préparation selon la revendication 16, **caractérisé en ce que** le noir de carbone ou le mélange de noirs de carbone de surface spécifique BET allant de 50 m²/g à 69 m²/g constitue au moins 85% en poids de la charge renforçante, préférentiellement au moins 95%, encore plus préférentiellement 100% de la charge renforçante.

18. Procédé de préparation selon la revendication 16 ou 17, **caractérisé en ce que** la proportion de la charge renforçante dans la composition varie de 20 pce à 35 pce, préférentiellement de 25 pce à 30 pce.

19. Procédé de préparation selon la revendication 18, **caractérisé en ce que** la fraction volumique de la charge renforçante dans la composition varie de 8.0% à 10.0%, préférentiellement de 8.7% à 9.4%.

## Patentansprüche

1. Reifenseitenwand, von der mindestens ein Teil eine Kautschukzusammensetzung auf Basis von mindestens einem Dienelastomer, einem Vernetzungssystem und einem verstärkenden Füllstoff aufweist, **dadurch gekennzeichnet, dass** der Gehalt an verstärkendem Füllstoff in der Zusammensetzung im Bereich von 20 bis 40 Gewichtsteilen pro hundert Teile Elastomer, phe, liegt, wobei ein Volumenanteil an verstärkendem Füllstoff in der Zusammensetzung im Bereich von 8,0% bis 13,0% liegt, und dass dieser verstärkende Füllstoff hauptsächlich einen Ruß oder eine Mischung von Rußen mit einer spezifischen BET-Oberfläche von 50 m²/g bis 69 m²/g umfasst.

2. Reifenseitenwand nach Anspruch 1, **dadurch gekennzeichnet, dass** der Ruß bzw. die Mischung von Rußen mit einer spezifischen BET-Oberfläche von 50 m²/g bis 69 m²/g mindestens 85 Gew.-% des verstärkenden Füllstoffs, weiter bevorzugt mindestens 95% des verstärkenden Füllstoffs, ausmacht.

3. Reifenseitenwand nach Anspruch 1 oder 2, **dadurch gekennzeichnet, dass** der Ruß bzw. die Mischung von Rußen mit einer spezifischen BET-Oberfläche von 50 m²/g bis 69 m²/g als Mischung mit einem oder mehreren anderen organischen oder anorganischen verstärkenden Füllstoffen verwendet wird.

4. Reifenseitenwand nach Anspruch 1 oder 2, **dadurch gekennzeichnet, dass** der Ruß bzw. die Mischung von Rußen mit einer spezifischen BET-Oberfläche von 50 m²/g bis 69 m²/g 100% des verstärkenden Füllstoffs ausmacht.

5. Reifenseitenwand nach einem der Ansprüche 1 bis 4, **dadurch gekennzeichnet, dass** der Ruß bzw. die Mischung von Rußen mit einer spezifischen BET-Oberfläche von 50 m²/g bis 69 m²/g eine COAN-Ölabsorptionszahl im Bereich von 80 ml/100 g bis 120 ml/100 g aufweist.

6. Reifenseitenwand nach einem der Ansprüche 1 bis 5, **dadurch gekennzeichnet, dass** der Anteil an verstärkendem Füllstoff in der Zusammensetzung im Bereich von 20 phe bis 35 phe liegt.

7. Reifenseitenwand nach Anspruch 6, **dadurch gekennzeichnet, dass** der Anteil an verstärkendem Füllstoff in der Zusammensetzung im Bereich von 25 phe bis 30 phe liegt.

8. Reifenseitenwand nach einem der Ansprüche 6 oder 7, **dadurch gekennzeichnet, dass** der Volumenanteil des verstärkenden Füllstoffs in der Zusammensetzung im Bereich von 8,0% bis 10,0% liegt.

9. Reifenseitenwand nach Anspruch 8, **dadurch gekennzeichnet, dass** der Volumenanteil des verstärkenden Füllstoffs in der Zusammensetzung im Bereich von 8,7% bis 9,4% liegt.

10. Reifenseitenwand nach einem der Ansprüche 1 bis 9, **dadurch gekennzeichnet, dass** die Kautschukzusammensetzung eine Mischung von Elastomeren umfasst, die aus 30 bis 55% Naturkautschuk, synthetischem Polyisopren oder einer Mischung von Naturkautschuk und synthetischem Polyisopren und 45 bis 70% eines Dienelastomers, das aus Polybutadienen, Styrol-Butadien-Copolymeren, Isopren-Butadien-Copolymeren, Isopren-Styrol-Copolymeren und Isopren-Butadien-Styrol-Terpolymeren und Mischungen dieser letztgenannten Substanzen ausgewählt ist, besteht.

11. Reifenseitenwand nach Anspruch 10, **dadurch gekennzeichnet, dass** es sich bei dem Dienelastomer um ein Polybutadien, vorzugsweise ein cis-1,4-Polybutadien, handelt.

12. Reifenseitenwand nach einem der Ansprüche 1 bis 11, **dadurch gekennzeichnet, dass** die Kautschukzusammensetzung einen Weichmacher umfasst.

13. Reifenseitenwand nach einem der Ansprüche 1 bis 12, **dadurch gekennzeichnet, dass** sich der Seitenwandteil auf der Außenseite der Seitenwand befindet.

14. Reifenseitenwand nach einem der Ansprüche 1 bis 13, **dadurch gekennzeichnet, dass** sich der Seitenwandteil vom Scheitel bis zum Wulst erstreckt.

15. Reifen mit einer Seitenwand nach einem der Ansprüche 1 bis 14.

16. Verfahren zur Herstellung einer Reifenseitenwandzusammensetzung auf Basis von mindestens einem Dienelastomer, einem Vernetzungssystem und einem verstärkenden Füllstoff, **dadurch gekennzeichnet, dass** der Gehalt an verstärkendem Füllstoff in der Zusammensetzung im Bereich von 20 bis 40 phe liegt, wobei ein Volumenanteil an verstärkendem Füllstoff in der Zusammensetzung im Bereich von 8,0% bis 13,0% liegt, und dass dieser verstärkende Füllstoff hauptsächlich einen Ruß oder eine Mischung von Rußen mit einer spezifischen BET-Oberfläche von 50 m²/g bis 69 m²/g umfasst, und dass das Verfahren die folgenden Schritte umfasst:
• thermomechanisches Kneten des Dienelastomers und des verstärkenden Füllstoffs bis zum Erreichen einer Höchsttemperatur zwischen 110°C und 190°C;
• Abkühlen des Ganzen auf eine Temperatur von weniger als 100°C;
• anschließendes Einarbeiten des Vernetzungssystems;
• Kneten des Ganzen bis zu einer Höchsttemperatur von weniger als 110°C zum Erhalt einer Kautschukzusammensetzung,
• Kalandrieren oder Extrudieren der Kautschukzusammensetzung.

17. Herstellungsverfahren nach Anspruch 16, **dadurch gekennzeichnet, dass** der Ruß bzw. die Mischung von Rußen mit einer spezifischen BET-Oberfläche von 50 m²/g bis 69 m²/g mindestens 85 Gew.-% des verstärkenden Füllstoffs, weiter bevorzugt mindestens 95%, noch weiter bevorzugt 100%, des verstärkenden Füllstoffs, ausmacht.

18. Herstellungsverfahren nach Anspruch 16 oder 17, **dadurch gekennzeichnet, dass** der Anteil an verstärkendem Füllstoff in der Zusammensetzung im Bereich von 20 phe bis 35 phe, vorzugsweise von 25 phe bis 30 phe, liegt.

19. Herstellungsverfahren nach Anspruch 18, **dadurch gekennzeichnet, dass** der Volumenanteil des verstärkenden Füllstoffs in der Zusammensetzung im Bereich von 8,0% bis 10,0%, vorzugsweise von 8,7% bis 9,4%, liegt.

## Claims

1. Tyre sidewall, at least one portion of which has a rubber composition based on at least a diene elastomer, a crosslinking system and a reinforcing filler, **characterized in that** the content of reinforcing filler in the composition varies from 20 to 40 parts by weight per hundred parts of elastomer, phr, with a volume fraction of reinforcing filler in the composition ranging from 8.0% to 13.0%, and **in that** this reinforcing filler comprises predominantly a carbon black or a mixture of carbon blacks, the BET specific surface area of which ranges from 50 m²/g to 69 m²/g.

2. Tyre sidewall according to Claim 1, **characterized in that** the carbon black or the mixture of carbon blacks with a BET specific surface area ranging from 50 m²/g to 69 m²/g constitutes at least 85% by weight of the reinforcing filler, more preferably at least 95% of the reinforcing filler.

3. Tyre sidewall according to Claim 1 or 2, **characterized in that** the carbon black or the mixture of carbon blacks with a BET specific surface area ranging from 50 m²/g to 69 m²/g is used as a mixture with one or more other organic or inorganic reinforcing fillers.

4. Tyre sidewall according to Claim 1 or 2, **characterized in that** the carbon black or the mixture of carbon blacks with a BET specific surface area ranging from 50 m²/g to 69 m²/g constitutes 100% of the reinforcing filler.

5. Tyre sidewall according to any one of Claims 1 to 4, **characterized in that** the carbon black or the mixture of carbon blacks with a BET specific surface area ranging from 50 m²/g to 69 m²/g has a COAN oil absorption number ranging from 80 ml/100 g to 120 ml/100 g.

6. Tyre sidewall according to any one of Claims 1 to 5, **characterized in that** the proportion of reinforcing filler in the composition varies from 20 phr to 35 phr.

7. Tyre sidewall according to Claim 6, **characterized in that** the proportion of reinforcing filler in the composition varies from 25 phr to 30 phr.

8. Tyre sidewall according to either one of Claims 6 and 7, **characterized in that** the volume fraction of the reinforcing filler in the composition varies from 8.0% to 10.0%.

9. Tyre sidewall according to Claim 8, **characterized in that** the volume fraction of the reinforcing filler in the composition varies from 8.7% to 9.4%.

10. Tyre sidewall according to any one of Claims 1 to 9, **characterized in that** the rubber composition comprises a mixture of elastomers composed of 30 to 55% of natural rubber, of a synthetic polyisoprene or of a mixture of natural rubber and of a synthetic polyisoprene, and of 45 to 70% of a diene elastomer chosen from polybutadienes, styrene-butadiene copolymers, isoprene-butadiene copolymers, isoprene-styrene copolymers and isoprene-butadiene-styrene terpolymers and mixtures of the latter.

11. Tyre sidewall according to Claim 10, **characterized in that** said diene elastomer is a polybutadiene, preferably a *cis*-1,4-polybutadiene.

12. Tyre sidewall according to any one of Claims 1 to 11, **characterized in that** the rubber composition comprises a plasticizer.

13. Tyre sidewall according to any one of Claims 1 to 12, **characterized in that** the portion of sidewall is located on the outer face of the sidewall.

14. Tyre sidewall according to any one of Claims 1 to 13, **characterized in that** the portion of sidewall extends from the crown to the bead.

15. Tyre comprising a sidewall according to any one of Claims 1 to 14.

16. Process for preparing a tyre sidewall composition based on at least a diene elastomer, a crosslinking system and a reinforcing filler, **characterized in that** the content of reinforcing filler in the composition varies from 20 to 40 phr with a volume fraction of reinforcing filler in the composition ranging from 8.0% to 13.0%, and that this reinforcing filler comprises predominantly a carbon black or a mixture of carbon blacks with a BET specific surface area ranging from 50 m²/g to 69 m²/g, and **in that** the process comprises the following steps:
• thermomechanically kneading the diene elastomer and the reinforcing filler until a maximum temperature of between 110°C and 190°C is reached;
• cooling the mixture down to a temperature below 100°C;
• then incorporating the crosslinking system;
• kneading everything until a maximum temperature below 110°C is reached in order to obtain a rubber composition,
• calendering or extruding the rubber composition.

17. Preparation process according to Claim 16, **characterized in that** the carbon black or the mixture of carbon blacks with a BET specific surface area ranging from 50 m²/g to 69 m²/g constitutes at least 85% by weight of the reinforcing filler, preferably at least 95%, more preferably still 100% of the reinforcing filler.

18. Preparation process according to Claim 16 or 17, **characterized in that** the proportion of the reinforcing filler in the composition varies from 20 phr to 35 phr, preferably from 25 phr to 30 phr.

19. Preparation process according to Claim 18, **characterized in that** the volume fraction of the reinforcing filler in the composition varies from 8.0% to 10.0%, preferably from 8.7% to 9.4%.
